# EUROPÄISCHE PATENTANMELDUNG

(11) **EP 2 039 645 A2**
(43) Veröffentlichungstag der Anmeldung: **25.03.2009**
(21) Anmeldenummer: 08016323.1
(22) Anmeldetag: 17.09.2008
(51) Int. Cl.: B66F 7/20, B66F 11/04

(54) **Arbeitsbühne**

(30) Priorität: 22.09.2007 DE 102007045353
(71) Anmelder: CLAAS Fertigungstechnik GmbH, 48361 Beelen (DE)
(72) Erfinder: Knurr, Frank, 31234 Edemissen (DE)
(74) Vertreter: Heuer, Wilhelm

(57) **Zusammenfassung**

Eine Arbeitsbühne (1) für die Flugzeugwartung hat zwei Fahrgestelle (3a, 3b), eine Arbeitsplattform (5) und zwei die Arbeitsplattform (5) mit den Fahrgestellen (3a, 3b) verbindende höhenverstellbare Tragmittel (4a, 4b). Die Nutzfläche der Arbeitsplattform (5) ist aus wenigstens zwei voneinander trennbaren Segmenten (5a, 5b, ...) zusammengesetzt, wobei ein erstes (5a) der Segmente durch das erste Fahrgestell (3a) und das erste höhenverstellbare Tragmittel (4a) und ein zweites (5b) der Segmente durch das zweite Fahrgestell (3a) und das zweite höhenverstellbare Tragmittel (4b) abgestützt ist.

## Beschreibung

Die vorliegende Erfindung betrifft eine fahrbare Arbeitsbühne, die insbesondere für Wartungsarbeiten an Flugzeugen geeignet ist.

Eine höhenverstellbare Arbeitsbühne ist zum Beispiel aus DE 103 35 687 A1 bekannt. Diese Arbeitsbühne umfasst ein Fahrgestell, eine Arbeitsplattform und höhenverstellbare Tragmittel, die die Arbeitsplattform mit dem Fahrgestell verbinden, in Form von drei einander kreuzend angeordneten Teleskopmasten.

Eine solche Arbeitsbühne ist geeignet, um Wartungsarbeiten an Außenflächen eines Flugzeugs vorzunehmen, unterhalb von denen das Flugzeug keine Vorsprünge aufweist. Oberflächen wie etwa eine Seitenwand des Flugzeugrumpfs oberhalb der Tragflächen oder die Scheiben des Cockpits sind mit dieser herkömmlichen Arbeitsbühne nicht befriedigend erreichbar.

In der Praxis führt dies dazu, dass ein Flugzeug, bei dem Wartungsarbeiten an der Außenhaut durchgeführt werden müssen, mit dem Bug in ein feststehendes Dock eingefahren und entlang des Rumpfes mobile Dockelemente angebaut werden, um die Außenhaut komplett zugänglich zu machen. Dieser Vorgang nimmt 300 bis 600 Arbeitsstunden in Anspruch, d.h. er ist extrem zeitaufwändig und kostspielig. Da die feststehenden Docks, die den Zugang zu den Cockpitscheiben ermöglichen, jeweils für einen Flugzeugtyp spezifisch sind, ist es schwierig, unterschiedliche Flugzeugtypen in einem gleichen Hangar zu warten. Wenn an einem Wartungsplatz unterschiedliche Typen von feststehenden Docks bereitstehen, kann jeweils zu jeder Zeit nur einer von diesen genutzt werden; beschränkt man sich auf einen Typ von Dock pro Wartungsplatz, so werden für die Wartung verschiedener Flugzeugtypen sehr große Hangarflächen benötigt.

Aufgabe der Erfindung ist, eine mobile Arbeitsbühne zu schaffen, die einen leichten und sicheren Zugang auch zu Teilen einer Flugzeugoberfläche ermöglicht, die oberhalb eines Vorsprungs der Flugzeugaußenhaut liegen, insbesondere zu den Cockpitfenstern oberhalb der Bugspitze eines Flugzeugs.

Die Aufgabe wird gelöst, indem bei einer Arbeitsbühne mit einem ersten Fahrgestell, einer Arbeitsplattform und einem die Arbeitsplattform mit dem Fahrgestell verbindendem ersten höhenverstellbaren Tragmittel die Nutzfläche der Arbeitsplattform aus wenigstens zwei voneinander trennbaren Segmenten zusammengesetzt ist, wobei ein erstes der Segmente durch das erste Fahrgestell und das zweite höhenverstellbare Tragmittel und ein zweites der Segmente durch ein zweites Fahrgestell und ein zweites höhenverstellbares Tragmittel abgestützt ist. Indem der Vorsprung, d.h. die Bugspitze in einen Zwischenraum zwischen den zwei Tragmitteln eingreifen kann, kann eine solche Arbeitsbühne über die Bugspitze unmittelbar an die Cockpitscheiben herangefahren werden.

Um den Abstand zwischen den Tragmitteln zu vergrößern, ist vorzugsweise wenigstens ein drittes Segment zwischen dem ersten und dem zweiten Segment der Arbeitsplattform platzierbar. Das wenigstens eine dritte Segment kann zweckmäßigerweise durch wenigstens zwei Längsträger gestützt sein, die ihrerseits jeweils an den beiden Tragmitteln abgestützt sind.

Das dritte Segment kann bei Nichtgebrauch von der Arbeitsbühne abnehmbar sein.

Um die Zugänglichkeit der Flugzeugaußenhaut zu optimieren, kann das dritte Segment eine Aussparung mit einem an die Kontur eines Flugzeugbugs angepassten Randverlauf aufweisen. So ist von den diversen Segmenten der Arbeitsplattform nur das dritte spezifisch für ein bestimmtes Flugzeugmodell und muss ausgewechselt werden, wenn mit der erfindungsgemäßen Arbeitsbühne unterschiedliche Flugzeugtypen gewartet werden sollen.

Um die Stabilität der Arbeitsplattform zu verbessern, kann ein viertes Segment vorgesehen werden, welches das erste und das zweite Segment verbindet. Dieses vierte Segment kann zweckmäßigerweise auch zur Abstützung des dritten Segments dienen.

Einer alternativen Ausgestaltung zufolge ist das dritte Segment zwischen einer mit dem ersten Segment im Wesentlichen überlappenden und einer mit dem ersten Segment im Wesentlichen überlappungsfreien Stellung teleskopierbar.

Einer Weiterentwicklung zufolge ist an dem ersten und dem zweiten Segment der Arbeitsplattform jeweils ein erster bzw. ein zweiter Teleskopauszug vorgesehen, der an das jeweils andere der beiden Segmente ankoppelbar ist, wobei jeder Teleskopauszug jeweils wenigstens eine proximale und eine distale verschiebbare Schien umfasst und jede proximale Schiene mit einem teleskopierbaren Segment der Arbeitsplattform verbunden ist.

Für die Sicherheit des Wartungspersonals ist es ferner zweckmäßig, dass die Segmente ein teleskopierbares Geländer aufweisen.

Jedes Fahrgestell der Arbeitsbühne weist vorzugsweise einen eigenen Motor auf. Dies ermöglicht es, die zwei jeweils ein Fahrgestell, Tragmittel und ein Arbeitsplattformsegment umfassenden Baueinheiten der erfindungsgemäßen Arbeitsbühne jeweils auch einzeln als vollständige selbst fahrende Arbeitsbühnen einzusetzen. Um die zwei Baueinheiten der erfindungsgemäßen Arbeitsbühne koordiniert zu bewegen, sind die Motoren der beiden Fahrgestelle vorzugsweise durch eine gemeinsame Steuereinrichtung synchron steuerbar.

Um die zwei Baueinheiten der erfindungsgemäßen Arbeitsbühne unabhängig voneinander benutzen zu können, weist vorzugsweise jedes Fahrgestell eine eigene Steuereinrichtung auf, die eingerichtet ist, als die gemeinsame Steuereinrichtung zu arbeiten.

Um abschüssige Oberflächen der Flugzeugaußenhaut wie etwa eine Flügeloberfläche bearbeiten zu können, ist es zweckmäßig, dass das erste und das zweite Tragmittel auf unterschiedliche Höhen einstellbar sind.

Weitere Merkmale und Vorteile der Erfindung ergeben sich aus der nachfolgenden Beschreibung von Ausführungsbeispielen anhand der beigefügten Figuren. Es zeigen:
- Fig. 1: eine schematische Vorderansicht einer erfindungsgemäßen Arbeitsbühne, platziert vor dem Bug eines Flugzeugs;
- Fig. 2: eine auseinander gezogene perspektivische Ansicht von Teilen der erfindungsgemäßen Arbeitsbühne;
- Fig. 3: eine Draufsicht auf eine Weiterentwicklung der Arbeitsbühne aus Fig.2;
- Fig. 4: eine erste Abwandlung der Arbeitsbühne aus Fig. 3;
- Fig. 5: eine zweite Abwandlung der Arbeitsbühne aus Fig. 3;
- Fig. 6: eine dritte Abwandlung der Arbeitsbühne aus Fig. 3;
- Fig. 7: eine perspektivische Ansicht eines Teils einer Arbeitsbühne gemäß einer zweiten Ausgestaltung der Erfindung in teleskopisch zusammen geschobener Konfiguration;
- Fig. 8: eine perspektivische Ansicht des Teils in auseinander gezogener Konfiguration; und
- Fig. 9: eine Variante des Teils aus Fig. 8.

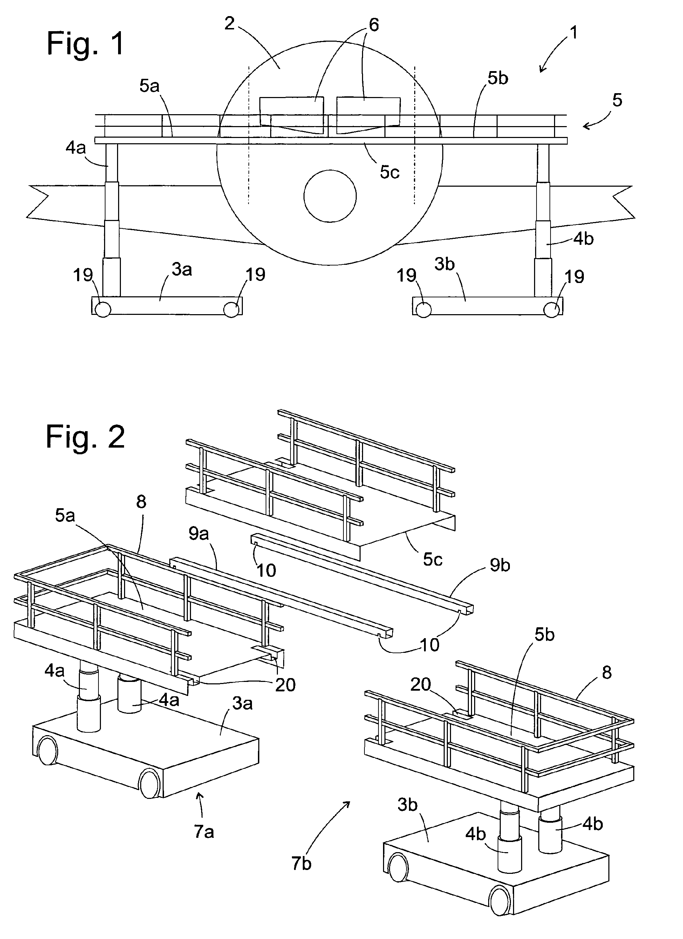

Fig. 1 zeigt eine Vorderansicht einer erfindungsgemäßen Arbeitsbühne 1, platziert vor einem zu wartenden Flugzeug 2. Die Arbeitsbühne 1 umfasst zwei motorisierte Fahrgestelle 3a, 3b, mit darauf montierten Tragmitteln 4a, 4b, hier in Form von vertikal ausgerichteten, teleskopisch ausfahrbaren Hydraulikzylindern, und eine von den Tragmitteln 4a, 4b unterstützte, aus Segmenten 5a, 5b, 5c zusammengefügte Arbeitsplattform 5. Die Fahrgestelle 3a, 3b fahren auf so genannten MECANUM-Rollen 19. Diese an sich bekannten Rollen 19 umfassen zwei um eine Hauptdrehachse drehantreibbare Radscheiben, zwischen denen mehrere um jeweils zur Hauptdrehachse windschiefe Achsen frei drehbare Rollkörper angeordnet sind. Lediglich die Rollkörper haben Bodenkontakt. Diese Rollen unterstützen diverse Bewegungsmodi. Indem alle Radscheiben gleichsinnig um die Hauptdrehachse gedreht werden, fährt das Fahrwerk vor- oder rückwärts, senkrecht zu der Hauptdrehachse. Um nach rechts oder links zu fahren, werden jeweils benachbarte Rollen in entgegengesetzte Richtungen drehangetrieben. Werden die rechten und linken Rollen jeweils gegensinnig drehangetrieben, so rotiert das Fahrgestell auf der Stelle.

Die Abmessungen der Segmente 5a, 5b entsprechen in etwa denen der jeweils darunter liegenden Fahrgestelle 3a, 3b; das dazwischen liegende Segment 5c ist an den beiden benachbarten Segmenten 5a, 5b formschlüssig verankert und unterstützt. Unterhalb der Arbeitsplattform 5 ist ein breiter Zwischenraum gebildet, in den die Bugspitze des Flugzeugs 2 eintauchen kann, so dass die Arbeitsplattform 5 über die Bugspitze hinweg in unmittelbarer Nachbarschaft der Cockpitfenster 6 gefahren werden kann.

Die Tragmittel 4a, 4b sind auf den Fahrgestellen 3a, 3b jeweils außermittig platziert, um den Zwischenraum unterhalb der Arbeitsplattform 5 breit zu machen. Wie man leicht sieht, könnten die Tragmittel 4 aber auch jeweils zentral auf den Fahrgestellen 3a, 3b platziert sein, oder es könnte ein Scherenmechanismus des aus DE 103 35 687 A1 bekannten Typs als Tragmittel verwendet sein, da die zum Überfahren der Bugspitze erforderliche Breite des Zwischenraums ohne Schwierigkeiten bereit gestellt werden kann, indem das mittlere Segment 5c breit genug gemacht wird oder mehrere mittlere Segmente 5c nebeneinander zwischen den äußeren Segmenten 5a, 5b platziert werden.

Fig. 2 zeigt detaillierter den Aufbau der Arbeitsbühne 1 aus Fig. 1 in einer auseinander gezogenen perspektivischen Ansicht. Es bilden jeweils das Fahrgestell 3a, das Tragmittel 4a und das Segment 5a bzw. das Fahrgestell 3b, das Tragmittel 4b und das Segment 5b ein autonomes Fahrzeug 7a bzw. 7b, das für sich allein als Arbeitsbühne fungieren kann. Zweckmäßigerweise wird hierfür das in Fig. 2 jeweils nur an drei Rändern der Segmente 5a, 5b gezeigte Geländer 8 durch ein (nicht dargestelltes) Hilfsgeländer an dem in Fig. 2 jeweils ungesicherten Rand der Segmente 5a, 5b ergänzt.

Um die beiden Fahrzeuge 7a, 7b zu der Arbeitsbühne 1 zusammenzufügen, werden in Vertiefungen 20 der Segmente 5a, 5b jeweils Längsträger 9a, 9b eingesetzt, die die Segmente 5a, 5b formschlüssig aneinander koppeln. Die formschlüssige Kopplung kann zum Beispiel mit Hilfe von Aussparungen 10 der Längsträger 9a, 9b erhalten werden, in die jeweils eine (in Fig. 2 nicht sichtbare) Rippe des Segments 5a bzw. 5b eingreift; jede andere Art von Formschluss kommt ebenfalls in Betracht. Auf den montierten Längsträgern 9 wird anschließend das mittlere Segment 5c platziert, um die Lücke zwischen den Segmenten 5a, 5b zu schließen und eine durchgehende, ebene Arbeitsplattform 5 zu erhalten.

Solange die Fahrzeuge 7a, 7b nicht aneinander gekoppelt sind, müssen ihre Arbeitsplattform-Segmente 5a, 5b in horizontaler Stellung verriegelt sein, um ein sicheres Arbeiten zu ermöglichen. Wenn die Segmente 5a, 5b, 5c zu einer in sich starren Arbeitsplattform 5 verkoppelt sind, kann diese Verriegelung gelöst werden, um eine Höhenverstellung der Tragmittel 4a und 4b unabhängig voneinander zu ermöglichen. So kann eine von der Horizontalen abweichende Stellung der Arbeitsplattform 5, zum Beispiel parallel zur Tragflächenunterseite des Flugzeugs 2, eingestellt werden, wenn die Arbeitsbühne 1 für Arbeiten an der Tragfläche eingesetzt werden soll.

Da jedes Fahrzeug 7a, 7b für sich allein als Arbeitsbühne einsetzbar ist, verfügt es auch über eine Benutzerschnittstelle, zum Beispiel in Form eines Bedienfeldes am Fahrgestell 3 oder einer Funkfernsteuerung, und eine Steuereinrichtung (nicht dargestellt) zum Umsetzen von über die Benutzerschnittstelle eingegebenen Befehlen in Befehle zum Steuern der einzelnen Motoren der Rollen 19. Im gekoppelten Zustand müssen die Motoren beider Fahrgestelle 3a, 3b koordiniert arbeiten, um Translations- oder Drehbewegungen der Arbeitsbühne 1 zu ermöglichen. Die Steuereinrichtungen der Fahrgestelle 3a, 3b sind eingerichtet, um den gekoppelten Zustand der Fahrzeuge 7a, 7b zum Beispiel anhand der Anwesenheit oder Nichtanwesenheit des Längsträgers 9a oder 9b in einer der Vertiefungen 20 zu erfassen und bei der Umsetzung der Benutzerbefehle in Befehle für die Motoren des Fahrgestells 3a bzw. 3b zu berücksichtigen.

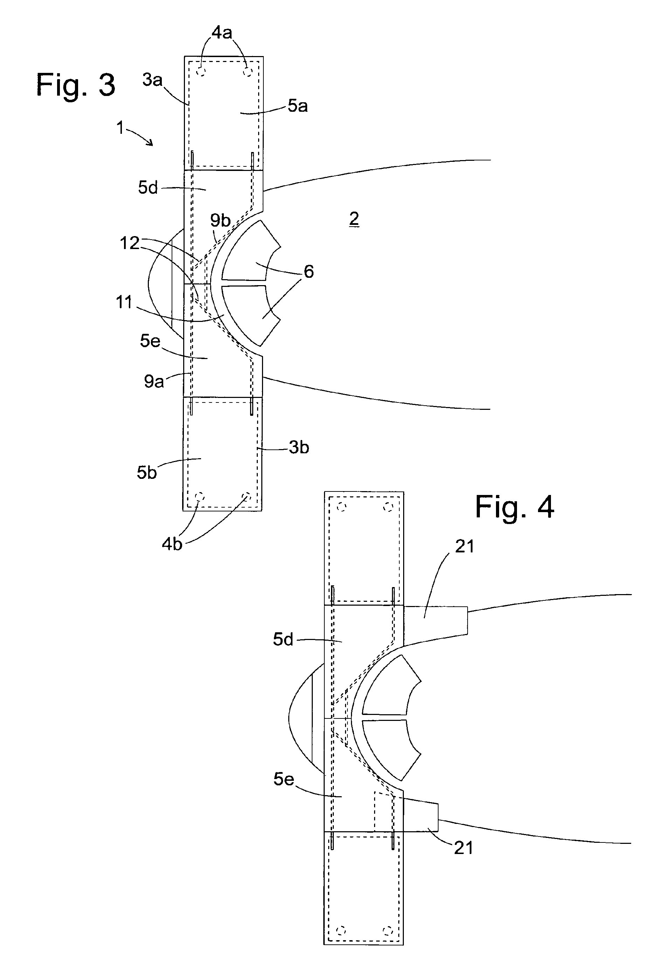

Fig. 3 zeigt eine Draufsicht auf eine abgewandelte Ausgestaltung der Arbeitsbühne mit einer aus vier Segmenten 5a, 5b, 5d, 5e zusammengesetzten Arbeitsplattform. Die Segmente 5a, 5b sind dieselben wie in Fig. 1 und 2 gezeigt. Der Längsträger 9a ist verlängert, um die zwei mittleren Segmente 5d, 5e zu stützen, und der Längsträger 9b hat einen abgewinkelten Verlauf rings um eine Aussparung 11 der beiden mittleren Segmente 5d, 5e. Ausleger 12 des Längsträgers 9b stützen sich auf den Längsträger 9A. Beide Längsträger 9a, 9b gemeinsam tragen die beiden mittleren Segmente 5d, 5e.

Die Kontur der Aussparung 11 ist an die Gestalt eines Flugzeugbugs angepasst und folgt dem Verlauf einer Höhenlinie des Flugzeugbugs knapp unterhalb der Cockpitfenster 6. So kann die Arbeitsbühne 1 bis in unmittelbare Nähe der Cockpitfenster 6 über den Flugzeugbug gefahren werden, und die Fenster 6 sind entlang der Ränder der Aussparung 11 bequem zugänglich.

Fig. 4 zeigt eine Weiterentwicklung der Arbeitsbühne 1 aus Fig. 3, bei der die mittleren Segmente 5d, 5e jeweils bewegliche Erweiterungssegmente 21 tragen. Die Erweiterungssegmente 21 können jeweils an einen Rand der Segmente 5d, 5e angelenkt sein, um bei Gebrauch ausgeschwenkt zu werden; in der Ausgestaltung der Fig. 4 sind sie bei Nichtgebrauch unter den Segmenten 5d, 5e verborgen und schienengeführt in die am Erweiterungssegment 21 des Segments 5d gezeigte Gebrauchsstellung ausfahrbar. Das Erweiterungssegment 21 des Segments 5e ist in einer teilweise ausgefahrenen Stellung gezeigt.

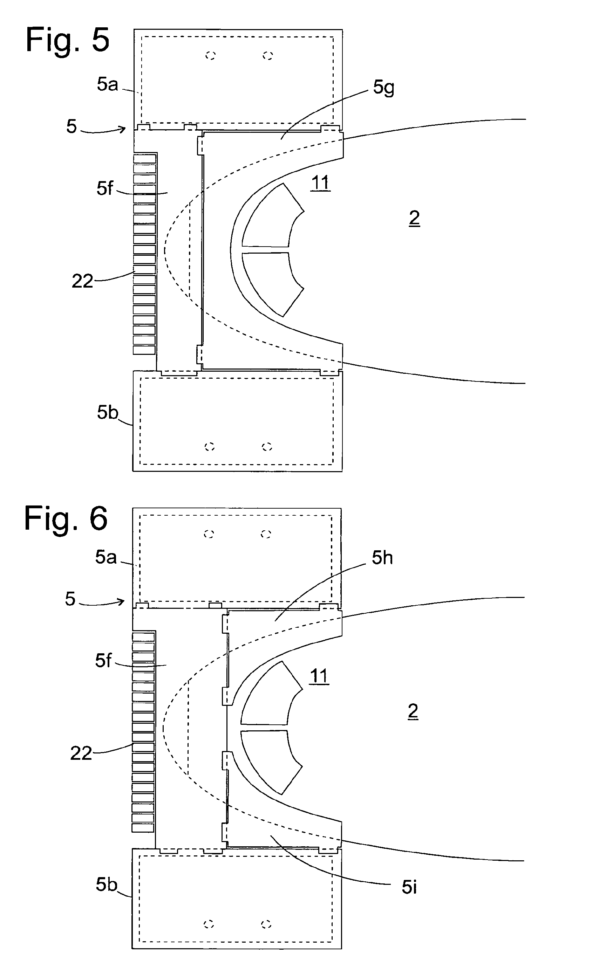

Bei der Ausgestaltung der Fig. 5 sind die Segmente 5a, 5b längs zum Rumpf des Flugzeugs ausgerichtet, und ein an ihnen abgestütztes und sie formschlüssig verbindendes Segment 5f erstreckt sich nur über einen Teil der Länge der Segmente 5a, 5b. Ein rechteckiges, an einer Längsseite mit einer flugzeugtypspezifischen Aussparung 11 versehenes Segment 5g stützt sich auf die Segmente 5a, 5b, 5f. Der Anteil von flugzeugtypspezifischen Segmenten an der Gesamtoberfläche der Arbeitsplattform 5 ist hier kleiner als bei der Ausgestaltung der Fig. 3 und 4, so dass die Kosten der Anpassung an diverse Flugzeugtypen geringer sind.

Eine an das Segment 5f angelenkte höhenverstellbare Treppe 22 erleichtert das Erreichen der Arbeitsplattform 5.

In der Ausgestaltung der Fig. 6 ist der Anteil der flugzeugtypspezifischen Segmente an der Gesamtoberfläche der Arbeitsplattform 5 weiter verringert, indem das Segment 5g durch zwei im Wesentlichen dreieckige Segmente 5h, 5i ersetzt ist, die sich jeweils auf das Segment 5f und eines der Segmente 5a, 5b stützen.

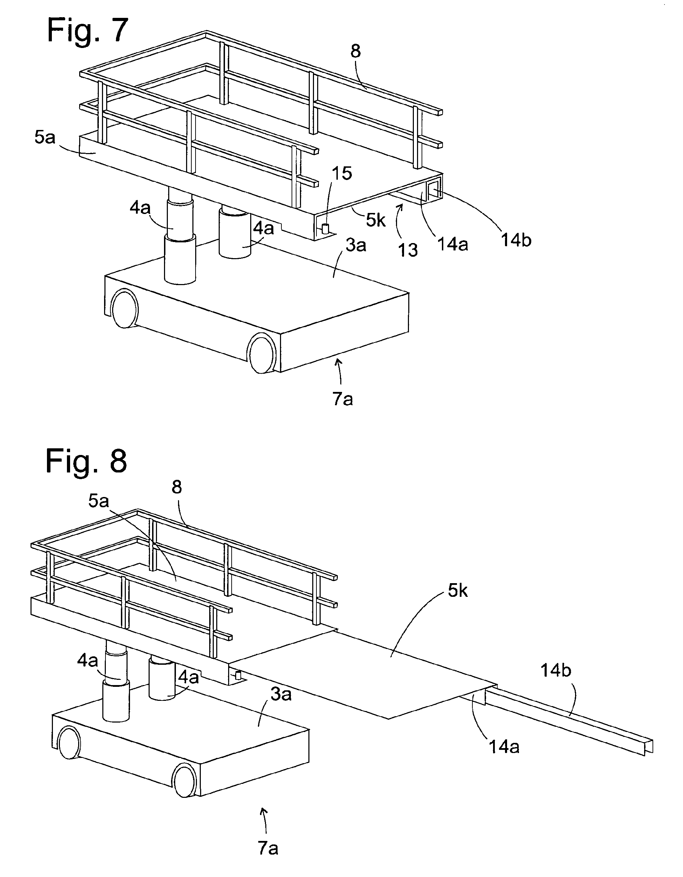

Eine zweite Ausgestaltung eines Fahrzeugs 7a der Arbeitsbühne ist in Fig. 7 in perspektivischer Ansicht gezeigt. Fahrgestell 3a, Tragmittel 4a und Arbeitsplattform-Segment 5a sind im Wesentlichen die Gleichen wie mit Bezug auf Fig. 2 beschrieben. Unterhalb des Segments 5a erstreckt sich eine Führung für einen Teleskopauszug 13. Der Teleskopauszug 13 umfasst eine unmittelbar an dem Segment 5a verschiebbar aufgehängte proximale Schiene 14a und eine in einem Hohlraum der proximalen Schiene 14a verschiebbar aufgenommene distale Schiene 14b. Die Schienen 14a, 14b sind aneinander gekoppelt, so dass die proximale Schiene 14a einer Verschiebung der distalen Schiene 14b mit jeweils der halben Geschwindigkeit folgt. Ein in der Konfiguration der Fig. 7 unter dem Segment 5a verborgenes Segment 5k ist fest mit der proximalen Schiene 14a verbunden. Das Segment 5a trägt ferner eine Rastkontur 15, an der die Spitze der proximalen Schiene 14a eines identisch aufgebauten Fahrzeugs formschlüssig verankerbar ist.

Fig. 8 zeigt dasselbe Fahrzeug wie Fig. 7 mit dem Teleskopauszug 13 und dem Arbeitsplattform-Segment 5k in auseinander gezogener Konfiguration. Wenn das Fahrzeug der Fig. 8 an ein spiegelbildlich angeordnetes baugleiches Fahrzeug gekoppelt ist, ist das Segment 5k des in der Fig. 8 gezeigten Fahrzeugs an einem Rand durch die proximale Schiene 14a des gezeigten Fahrzeugs und am gegenüberliegenden Rand durch die distale Schiene des nicht gezeigten Fahrzeugs unterstützt; entsprechend unterstützt die distale Schiene 14b des gezeigten Fahrzeugs ein teleskopisch ausgezogenes Arbeitsplattform-Segment des anderen Fahrzeugs. Die zwei Fahrzeuge bilden somit im gekoppelten Zustand eine Arbeitsbühne 1 mit einer in sich steifen viersegmentigen Arbeitsplattform. Während bei der Ausgestaltung der Fig. 2 der Abstand zwischen den äußeren Segmenten 5a, 5b durch die Länge der Längsträger 9A, 9B fest vorgegeben ist, kann die aus zwei Fahrzeugen gemäß Fig. 7 bzw. 8 gebildete Arbeitsplattform variable Breiten annehmen, je nachdem, wie weit die Schienen 14a, 14b ausgezogen sind. Aufgrund der Kopplung der Bewegungen der Schienen 14a, 14b aneinander berühren sich die Segmente 5k beider Fahrzeuge jederzeit, unabhängig davon, ob die Schienen 14a, 4b voll oder nur zum Teil ausgezogen sind. Die Arbeitplattform 5 hat somit unabhängig von ihrer Breite immer eine geschlossene Oberfläche und ist sicher benutzbar.

Die Ausgestaltungen der Fig. 7, 8 und Fig. 5, 6 können in der Weise kombiniert werden, dass die Segmente 5k von zwei Fahrzeugen gemäß Fig. 7, 8 die Funktion des Segments 5f gemäß Fig. 5 oder 6 wahrnehmen, Segmente mit flugzeugtypspezifischer Randkontur zu unterstützen.

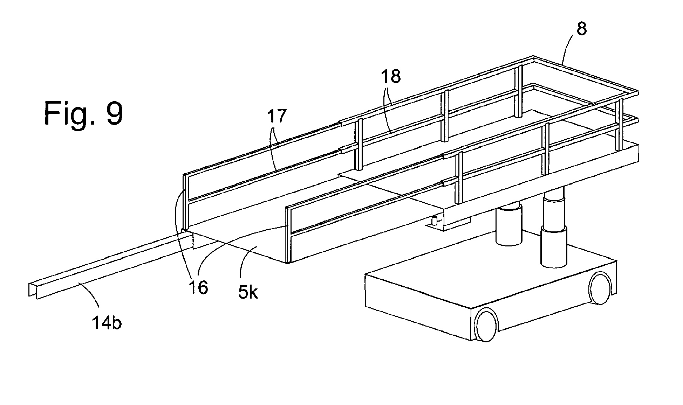

Fig. 9 ist eine zu Fig. 8 analoge Ansicht einer Abwandlung des in Fig. 7 und 8 gezeigten Fahrzeugs. Das ausziehbare Arbeitsplattform-Segment 5k ist hier mit einem Geländer versehen, das jeweils vertikale Stützen 16 an einem von dem Segment 5a abgewandten Rand des Segments 5k sowie von den vertikalen Stützen 16 ausgehende horizontale Stangen 17 umfasst, deren freie Enden in hohle horizontale Stangen 18 des Geländers 8 des Segments 5a eingreifen. Wenn das Segment 5k analog zur Darstellung der Fig. 7 unter das Segment 5a eingeschoben ist, sind die Stangen 17 in den Stangen 18 verborgen.

### Bezugszeichen

- 1: Arbeitbühne
- 2: Flugzeug
- 3a, 3b: Fahrgestell
- 4a, 4b: Tragmittel
- 5, 5a,...: Arbeitsplattform / Segmente
- 6: Cockpitfenster
- 7a, 7b: Fahrzeug
- 8: Geländer
- 9a, 9b: Längsträger
- 10: Aussparung
- 11: Aussparung
- 12: Ausleger
- 13: Teleskopauszug
- 14a, 14b: proximale/distale Schiene
- 15: Rastkontur
- 16: vertikale Stütze
- 17: horizontale Stange
- 18: horizontale Stange
- 19: Rolle
- 20: Vertiefung
- 21: Erweiterungssegment
- 22: Treppe

## Patentansprüche

1. Arbeitsbühne (1) mit einem ersten Fahrgestell (3a), einer Arbeitsplattform (5) und einem die Arbeitsplattform (5) mit dem Fahrgestell (3a) verbindenden ersten höhenverstellbaren Tragmittel (4a), **dadurch gekennzeichnet, dass** die Nutzfläche der Arbeitsplattform (5) aus wenigstens zwei voneinander trennbaren Segmenten (5a, 5b, ...) zusammengesetzt ist, wobei ein erstes (5a) der Segmente durch das erste Fahrgestell (3a) und das erste höhenverstellbare Tragmittel (4a) und ein zweites (5b) der Segmente durch ein zweites Fahrgestell (3a) und ein zweites höhenverstellbares Tragmittel (4b) abgestützt ist.

2. Arbeitsbühne nach Anspruch 1, **dadurch gekennzeichnet, dass** wenigstens ein drittes Segment (5c, 5d, ...) zwischen dem ersten und dem zweiten Segment (5a, 5b) platzierbar ist.

3. Arbeitsbühne nach Anspruch 2, **dadurch gekennzeichnet, dass** das dritte Segment (5d, 5e, 5g, 5h, 5i) eine Aussparung (11) mit einem an die Kontur eines Flugzeugbugs angepassten Randverlauf aufweist.

4. Arbeitsbühne nach Anspruch 3, **dadurch gekennzeichnet, dass** die Arbeitsplattform (5) ein viertes Segment (5f) umfasst, welches das erste und das zweite Segment (5a, 5b) verbindet.

5. Arbeitsbühne nach Anspruch 4, **dadurch gekennzeichnet, dass** das dritte Segment (5g, 5h, 5i) an dem vierten Segment (5f) abgestützt ist.

6. Arbeitsbühne nach Anspruch 2 oder 3, **gekennzeichnet durch** wenigstens zwei an jeweils beiden Tragmitteln abgestützte Längsträger (9a, 9b; 14a, 14b), die gemeinsam das dritte Segment (5c, 5d, 5e, 5k) stützen.

7. Arbeitsbühne nach Anspruch 2, 3 oder 6, **dadurch gekennzeichnet, dass** das dritte Segment (5k) zwischen einer mit dem ersten Segment (5a) im Wesentlichen überlappenden und einer mit dem ersten Segment (5a) im Wesentlichen überlappungsfreien Stellung teleskopierbar ist.

8. Arbeitsbühne nach Anspruch 2, 3, 7 oder 8, **dadurch gekennzeichnet, dass** an dem ersten und dem zweiten Segment (5a, 5b) der Arbeitsplattform (5) jeweils ein erster bzw. ein zweiter Teleskopauszug (13) angebracht und an das jeweils andere der beiden Segmente (5a, 5b) ankoppelbar ist, wobei jeder Teleskopauszug (13) jeweils wenigstens eine proximale und eine distale verschiebbare Schiene (14a, 14b) umfasst und jede proximale Schiene (14a) mit einem teleskopierbaren Segment (5k) der Arbeitsplattform (5) verbunden ist.

9. Arbeitsbühne nach Anspruch 7 oder 8, **dadurch gekennzeichnet, dass** die Segmente ein teleskopierbares Geländer (8; 16, 17) aufweisen.

10. Arbeitsbühne nach einem der vorhergehenden Ansprüche, **dadurch gekennzeichnet, dass** jedes Fahrgestell (3a, 3b) einen eigenen Motor aufweist und beide Motoren durch eine gemeinsame Steuereinrichtung synchron steuerbar sind.

11. Arbeitsbühne nach Anspruch 10, **dadurch gekennzeichnet, dass** jedes Fahrgestell (3a, 3b) eine eigene Steuereinrichtung aufweist, die eingerichtet ist, als die gemeinsame Steuereinrichtung zu arbeiten.

12. Arbeitsbühne nach einem der vorhergehenden Ansprüche, **dadurch gekennzeichnet, dass** das erste und das zweite Tragmittel (4a, 4b) auf unterschiedliche Höhen einstellbar sind.
